# EUROPÄISCHE PATENTSCHRIFT

(11) **EP 2 473 370 B1**
(45) Veröffentlichungstag und Bekanntmachung des Hinweises auf die Patenterteilung: **28.10.2020**
(21) Anmeldenummer: 10745201.3
(22) Anmeldetag: 12.08.2010
(51) Int. Cl.: B60L 53/14, B60L 53/20, B60L 50/62, B60L 1/00, B60L 3/00, H02J 1/06, B60L 53/60, H02J 1/10

(54) **STARTHILFEVERFAHREN UND EINRICHTUNG FÜR DIE DURCHFÜHRUNG DES VERFAHRENS**
JUMP START METHOD AND DEVICE FOR CARRYING OUT SAID METHOD
PROCÉDÉ D'ASSISTANCE AU DÉMARRAGE ET DISPOSITIF DE MISE EN OEUVRE DE CE PROCÉDÉ

(30) Priorität: 02.09.2009 DE 102009029091
(43) Veröffentlichungstag der Anmeldung: 11.07.2012
(73) Patentinhaber: Robert Bosch GmbH, 70442 Stuttgart (DE)
(72) Erfinder: NORDEN, Roland, 71706 Markgroeningen (DE); FASSNACHT, Jochen, 75365 Calw (DE)
(86) Internationale Anmeldenummer: PCT/EP2010/061773
(87) Internationale Veröffentlichungsnummer: WO 2011/026721

(56) Entgegenhaltungen:
- EP-A2- 0 177 180
- DE-A1-102006 016 138
- DE-A1-102007 052 750
- US-A- 5 283 513
- US-B1- 7 443 049

## Beschreibung

### Stand der Technik

Die Erfindung betrifft ein Starthilfeverfahren nach dem Oberbegriff des unabhängigen Anspruchs 1.

Ein konventionelles Kraftfahrzeug umfasst üblicherweise einen Verbrennungsmotor für den Antrieb und mindestens eine Batterie für die Speicherung elektrischer Energie. Im Pannenfall, zum Beispiel bei leerer oder nur noch schwach geladener Batterie, kann das Pannenfahrzeug vergleichsweise leicht mittels Starthilfe durch ein anderes Kraftfahrzeug wieder flott gemacht werden. Dazu werden die Bordnetze der beiden Fahrzeuge über ein 2-poliges Starthilfekabel miteinander verbunden. Hierbei ist nur zu beachten, dass die Bordnetzspannung der beiden Fahrzeuge gleich ist und das Starthilfe leistende Fahrzeug die nötige Leistung von etwa 1-5 KW für den Start des Verbrennungsmotors des Pannenfahrzeugs aufbringen kann. Über den Generator kann dann die leere Batterie bei laufendem Motor nachgeladen werden. Bei älteren Fahrzeugen und Fahrzeugen ohne Automatgetriebe ist sogar ein Anschleppen oder Anschieben möglich. Bei Elektrofahrzeugen (im Folgenden EV genannt) ist dies jedoch anders. Diese Fahrzeuge sind so konzipiert, dass sie üblicherweise nur an dem Stromnetz nachgeladen werden können.

Aus DE 101 10 615 A1 ist ein Verfahren für die Erzeugung von Ansteuerimpulsen für Leistungshalbleiter, insbesondere zum Zwecke der Generierung versetzter Ansteuerungsimpulse für Halbbrücken, die an Mehrphasenumrichtern oder Gleichspannungsumrichtern aufgenommen sind, bekannt. Bei diesem Verfahren erfolgt ein Verschieben der Referenzspannung um eine den Versetzungen entsprechende Verzögerungszeit oder ein Verschieben eines PWM-Signals um eine Verzögerungszeit, die der Periodendauert geteilt durch die Anzahl der Versetzungen entspricht.

Aus DE 101 19 985 A1 ist eine Vorrichtung zur Energieeinspeisung in ein Mehrspannungsbordnetz eines Kraftfahrzeugs bekannt. Diese Vorrichtung weist ein in einem Kraftfahrzeug angeordnetes Mehrspannungsbordnetz auf, das zumindest ein erstes und ein zweites Spannungsniveau, jeweils von dem Bezugspotential verschieden, bereitstellt. Das Mehrspannungsbordnetz wird aus zumindest einem elektrischen Energiespeicher gespeist. Es weist des Weiteren zumindest einen Wandler zur Verbindung der beiden Spannungsniveaus auf. Ferner sind Einspeisemittel zur externen Energieeinspeisung in das Mehrspannungsbordnetz vorgesehen. Der genannte Wandler kann in Form eines Multiphasenwandlers realisiert sein. Bei derartigen Wandlern werden mehrere Wandlerzellen kleinerer Leistung parallel geschaltet und die Leistungsteile zeitversetzt getaktet. Hierbei werden auf Grund von Auslöschungseffekten Filterbausteine eingespart. Mit derartigen Multiphasenwandlern wird es möglich, die ersten und zweiten Wandler mit den vorhandenen Phasen eines einzigen Multiphasenwandlers zu realisieren. Hierzu werden die Phasen aufgeteilt in Wandler mit Abwärts- und Aufwärtswandlerfunktion. Die Phasen werden dann wandlerintern über einen Schalter eingangsseitig getrennt.

Aus DE 10 2007 043 603.5 ist ein Multiphasengleichspannungswandler bekannt, welcher mehrere parallel zueinander angeordnete, zeitversetzt getaktete Wandlerzellen aufweist. Dabei ist zwischen den Ausgängen jeweils zweier Wandlerzellen jeweils eine magnetische Messbrücke angeordnet.

Aus DE 696 17 026 T2 ist ein System zum Laden einer Batterie von Akkumulatoren eines Kraftfahrzeugs aus einer einphasigen Spannungsquelle bekannt, wobei das Kraftfahrzeug mit einem Drehstrom-Antriebsmotor mit drei Wicklungen und mit einem Wechselrichter mit drei Unterbrechern zur Speisung des Drehstrommotors ausgestattet ist, wobei Mittel zum Betreiben des besagten Wechselrichters als Wechsel/Gleichspannungswandler mit einer Gleichrichter-Spannungserhöhungsstufe vorgesehen sind, die einen ersten und einen zweiten Unterbrecherzweig des Wechselrichters, eine Spannungserniedrigungsstufe mit einem dritten Unterbrecherzweig des Wechselrichters und Mittel aufweist zum Anschließen des ersten und zweiten Unterbrecherzweiges an die einphasige Spannungsquelle, der Mittenanzapfung des dritten Unterbrechungszweiges an die Batterie zur Versorgung mit Gleichspannung. Bei dem System sind die Mittenanzapfungen des ersten und des zweiten Unterbrecherzweiges mit der besagten einphasigen Spannungsquelle über eine erste Induktivität verbunden, die aus mindestens einer Wicklung des Drehstrommotors besteht. Weiterhin ist die Mittenanzapfung des dritten Unterbrecherzweiges mit der Batterie über eine zweite Induktivität verbunden, die aus mindestens einer Wicklung des besagten Drehstrommotors besteht, welche von der oder den Wicklungen, die die erste Induktivität bilden, verschieden ist.

Ein Elektrofahrzeug oder ein so genanntes Plug-In-Hybridfahrzeug, also ein Hybridfahrzeug, dessen Batterien am Stromnetz aufgeladen werden können, hat üblicherweise mindestens einen dreiphasigen Wechselrichter zur Ansteuerung einer elektrischen Drehstrommaschine für die Traktion des Elektrofahrzeugs. Ein derartiger Wechselrichter kann auch dazu benutzt werden, um in Zusammenwirken mit Netzdrosseln, dem Stromnetz Energie zu entnehmen oder Energie in das Stromnetz einzuspeisen. Dies ist beispielsweise auch von Aufzugsantrieben oder Kranantrieben bekannt. Hierbei wird zuerst über ein Vorladeschütz mit Widerständen der Zwischenkreis langsam auf eine Spannung kurz oberhalb der gleichgerichteten Netzspannung aufgeladen und danach wird der Wechselrichter als Hochsetzsteller eingesetzt, der den Netzdrehstrom gleichrichtet oder den Gleichstrom in dem Zwischenkreis in ein Drehstromsystem wechselrichtet. Bei den bekannten Applikationen werden die Netzströme durch den Wechselrichter anhand der Spannungsabweichung in dem Zwischenkreis von einem Sollwert und ggf. noch anhand eines Laststroms eingestellt. Für einen Einsatz als Batterieladegerät muss jedoch eine andere Ansteuerung des Wechselrichters vorgenommen werden, da hier der Batterieladestrom die gewünschte einzustellende Größe ist und nicht die gewünschte Zwischenkreisspannung.

US 5,283,513 A offenbart ein Batterieladegerät für Elektrofahrzeuge mit einer Hochvoltbatterie, umfassend einen ersten Stecker, der mit einer Hochspannungsquelle außerhalb des Fahrzeugs verbunden ist, einen zweiten Stecker, der mit einer Niederspannungsquelle außerhalb des Fahrzeugs verbunden ist, einen DC-DC Wandler zur Erhöhung der Spannung der Niederspannungsquelle auf eine Spannung entsprechend der Hochvoltbatterie, und einen Schalter zum Wechseln über die Anschlüsse.

EP 0 177 180 A2 offenbart eine Vorrichtung und ein Verfahren zum Aufladen einer Batterie in einem Fahrzeug aus dem Bordnetz eines anderen Fahrzeugs und zum Bestimmen, wann diese Batterie ausreichend aufgeladen ist.

US 7,443,049 B1 offenbart ein Ladesystem für eine Batterie eines Fahrzeugs, umfassend ein elektrisches Schnittstellenmodul, das eine erste und eine zweite elektrische Schnittstelle umfasst.

### Offenbarung der Erfindung

Der Erfindung liegt die Aufgabe zugrunde, eine Lösung für die Starthilfe bei einem Elektrofahrzeug anzugeben, wenn kein Stromnetz am Pannenort für die Aufladung des Elektrofahrzeugs zur Verfügung steht.

Diese Aufgabe wird durch das im unabhängigen Anspruch 1 genannte Verfahren gelöst.

Die erfinderische Lösung bietet den Vorteil, dass das infolge Energiemangel nicht mehr fahrbereite Fahrzeug innerhalb eines hinreichend kurzen Zeitraums von etwa 10 bis 15 Minuten wieder soweit geladen werden kann, dass das Fahrzeug aus eigener Kraft eine mit dem Stromnetz verbundene Ladestation erreichen kann. In Mitteleuropa muss das Fahrzeug dazu etwa 10 bis 20 km zurücklegen. Dabei stellt die erfinderische Lösung vorteilhaft sicher, dass das Pannenhilfe leistende Fahrzeug nicht soweit entladen wird, dass es nach geleisteter Starthilfe selbst liegenbleibt. Das Pannenhilfe leistende Fahrzeug muss also noch eine Energiereserve behalten, die ebenfalls eine Fahrleistung von mindestens 10 bis 20 km ermöglicht. Weiterhin stellt die Erfindung auch bei hoher Spannung eine sichere Energieübertragung zwischen den beteiligten Fahrzeugen bereit. Denn mit einer üblichen Bordnetzspannung von etwa 12V bis 42V kann die für eine sinnvolle Pannenhilfe notwendige Energiemenge nicht in dem genannten kurzen Zeitraum übertragen werden. Um eine universelle Verwendung zu ermöglichen, sieht die Erfindung standardisierte Schnittstellen vor. Dadurch ist eine Pannenhilfe zwischen beliebigen Elektrofahrzeugen möglich.

Weitere Vorteile ergeben sich aus den Unteransprüchen, der Beschreibung und der Zeichnung.

Ausführungsbeispiele der Erfindung werden im Folgenden unter Bezug auf die Zeichnung näher erläutert. Dabei zeigt
- Figur 1: die erfindungsgemäße Ausgestaltung eines Starthilfe gebenden und eines Starthilfe empfangenden Fahrzeugs mit wesentlichen Komponenten ihrer elektrischen Bordnetze;
- Figur 2: ein weiteres Ausführungsbeispiel eines Starthilfe gebenden und eines Starthilfe empfangenden Fahrzeugs mit wesentlichen Komponenten ihrer elektrischen Bordnetze;
- Figur 3: ein Diagramm mit Darstellung des Ladungszustands eines Starthilfe leistenden Fahrzeugs als Funktion der Zeit;
- Figur 4: ein Ablaufdiagramm zur Erläuterung des erfindungsgemäßen Starthilfevorgangs;
- Figur 5: ein weiteres Ausführungsbeispiel eines Starthilfe gebenden und eines Starthilfe empfangenden Fahrzeugs mit wesentlichen Komponenten ihrer elektrischen Bordnetze;
- Figur 6: ein weiteres Ausführungsbeispiel eines Starthilfe gebenden und eines Starthilfe empfangenden Fahrzeugs mit wesentlichen Komponenten ihrer elektrischen Bordnetze.

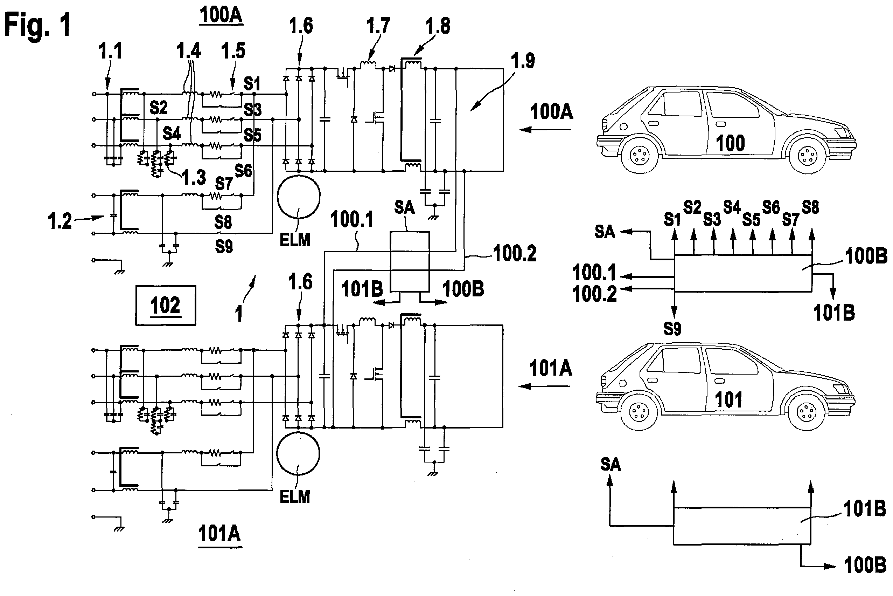

Figur 1 zeigt ein Starthilfe gebendes Fahrzeug 100 mit wesentlichen Komponenten seines Bordnetzes 100A und ein Starthilfe empfangendes Fahrzeug 101 mit wesentlichen Komponenten seines Bordnetzes 101A. Bei den Fahrzeugen 100, 101 handelt es sich um Elektrofahrzeuge, die jeweils von einer elektrischen Maschine ELM angetrieben werden, die jedoch in Figur 1 nur schematisch dargestellt ist. Die Bordnetze 100A, 101A der Fahrzeuge 100, 101 sind im Wesentlichen identisch. Im Folgenden werden daher nur die Komponenten des Bordnetzes 100A des Fahrzeugs 100 beschrieben, soweit sie in Figur 1 dargestellt sind. Das Bordnetz 100A umfasst einen Netzanschluss 1.1 für den Anschluss an ein dreiphasiges Stromnetz und zusätzlich einen Netzanschluss 1.2 für den Anschluss an ein zweiphasiges Stromnetz. Dies ermöglicht eine hohe Flexibilität für die Aufladung des oder der Energiespeicher des Fahrzeugs 100 an verschiedenen Stromnetzen. Unmittelbar auf den Netzanschluss 1.1 folgen ein Netzfilter 1.3, eine Netzdrossel 1.4, sowie ein Vorladeschütz/Hauptschütz 1.5. Daran schließen sich ein Gleichrichter 1.6 und ein Hoch-Tiefsetzsteller 1.7 an. Über ein EMV-Filter 1.8 ist eine Verbindung zu einer Zwischenkreisschiene 1.9 des Bordnetzes 100A geschaltet. Das Bordnetz 100 A umfasst weiter ein Steuergerät 100B über das die Schaltelemente S1, S2, S3, S4, S5, S6, S7, S8, S9 steuerbar sind. Bei einer einfachen Ausführungsform einer Einrichtung für die Starthilfe könnte nun daran gedacht werden, ähnlich wie bei herkömmlichen Bordnetzen, die beiderseitigen Batterien bzw. die beiderseitigen Gleichspannungszwischenkreise des Starthilfe leistenden und des Starthilfe empfangenden Fahrzeugs durch ein geeignetes Kabel miteinander zu verbinden. Leider besteht hier das Risiko, dass unzulässig hohe Ströme fließen bzw. die Starthilfe zum Scheitern verurteilt ist, weil die Batterie des Starthilfe erwartenden Fahrzeugs eine höhere Spannung aufweist als die Batterie des Starthilfe leistenden Fahrzeugs. Um diese Problematik zu vermeiden, muss ein Gleichstromsteller zur Spannungsanpassung und Leistungssteuerung vorgesehen werden. Je nach Struktur der betroffenen Bordnetze sind dabei verschiedene Ausführungsvarianten denkbar. Falls die Bordnetze 100A, 101A der Fahrzeuge 100, 101, wie in Figur 1 dargestellt, einen Gleichrichter 1.6 und einen nachgeschalteten Gleichspannungswandler (DC/DC-Wandler) umfassen, ist die in Figur 1 dargestellte Lösung geeignet. Dabei ist die Zwischenkreisschiene 1.9 des Starthilfe leistenden Fahrzeugs 100 über die Leitungen 100.1, 100.2 mit der Gleichstromschiene des Starthilfe erwartenden Fahrzeugs 101 verbunden. Die Leitungen 100.1, 100.2 sind zweckmäßig zu einem Starthilfekabel zusammengefasst, dass mit passenden Steckverbindern garniert ist, die in Verbindung mit fahrzeugfest angeordneten Steckverbindern eine verpolungssichere elektrische Verbindung zwischen den beiden Fahrzeugen 100, 101 ermöglichen. Generell ist demzufolge in jedem Fahrzeug eine Steckverbindung vorzusehen, über die jeweils die Zwischenkreisschiene (Batterieklemmen) und die Gleichstromschiene (nach der Gleichrichtereinheit und vor dem Gleichspannungswandler) jedes Fahrzeugs 100, 101 berührungssicher verbindbar sind. Über den jeweiligen Anschluss des Starthilfekabels mit den mindestens zwei Leitungen 100.1, 100.2 wird dann jeweils festgelegt, welches der beiden Fahrzeuge 100, 101 jeweils als Starthilfe erwartendes oder Starthilfe leistendes Fahrzeug ausgewählt ist. Besonders zweckmäßig kann auch noch eine Verbindung zwischen den Leitern 100.1 und 100.2 und dem Steuergerät 100B vorgesehen sein. Das Steuergerät 100B überwacht die Leitungen 100.1, 100.2 und signalisiert einen ggf. aufgetretenen Verpolungsfall. Besonders sicher ist eine Einrichtung, die im Verpolungsfall nicht nur ein Warnsignal ausgibt, sondern vorsorglich zusätzlich, mittels geeigneter Schaltelemente, die Verbindung zwischen den beiden Bordnetzen 100A, 101A unterbricht. Diese Schaltelemente werden zweckmäßig von dem Steuergerät 100B gesteuert. Die Leistungssteuerung der Energieübertragung erfolgt über den Gleichspannungswandler des Starthilfe empfangenden Fahrzeugs 101. Die Koordination der Ladungssteuerung müssen die Batteriemanagementsysteme der beiden beteiligten Bordnetze 100A, 101A übernehmen. Die ggf. für die Steuerung erforderliche Software kann zweckmäßig in den Steuergeräten 100B, 101B implementiert sein. Bei dem Starthilfe leistenden Fahrzeug 100 muss insbesondere überwacht werden, dass die Batterie nicht zu tief entladen wird und die Entladeleistung nicht unzulässig hoch ist. Bei dem Starthilfe erhaltenden Fahrzeug 101 ist insbesondere zu überwachen, dass die Batterieladeleistung nicht zu groß ist. Hierzu ist eine Kommunikation zwischen den beiden beteiligten Fahrzeugen erforderlich, die zweckmäßig durch die Steuergeräte 100B, 101B abgewickelt wird. Vorteilhaft kann dazu auch eine Schnittstelle SA in der Leitungsführung der Leitungen 100.1, 100.2 vorgesehen sein, die mit den Steuergeräten 100B, 101B verbindbar ist. Die von dem Gleichspannungswandler einzustellende Ladeleistung orientiert sich zweckmäßig an einer Minimalwertauswahl der möglichen Leistungen der beiden Batterien der beteiligten Fahrzeuge. Dabei ist auch festzulegen, welches der beiden Fahrzeuge die Steuerung des leistungssteuernden Gleichspannungswandlers übernimmt. Bevorzugt wird dabei die Steuerung durch das die Starthilfe empfangende Fahrzeug übernommen, da auch dessen Gleichspannungswandler für den Starthilfevorgang eingesetzt wird.

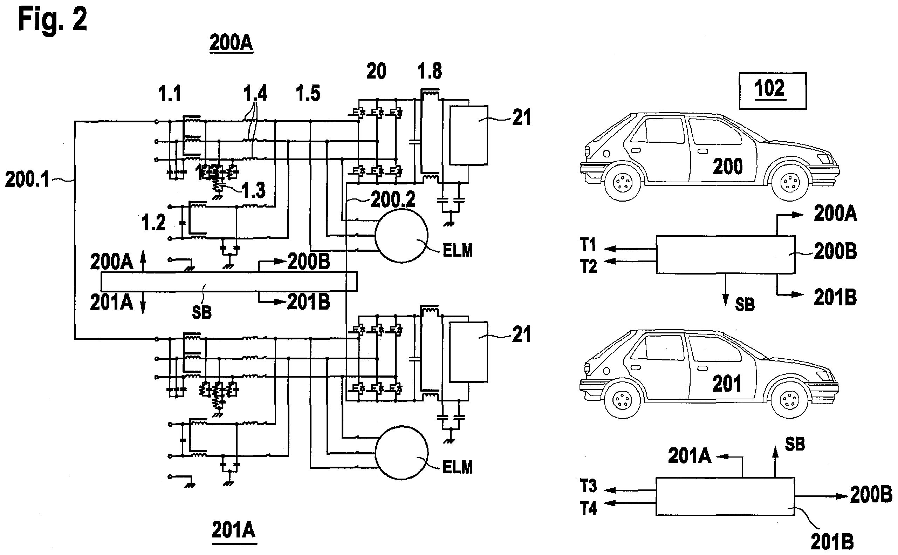

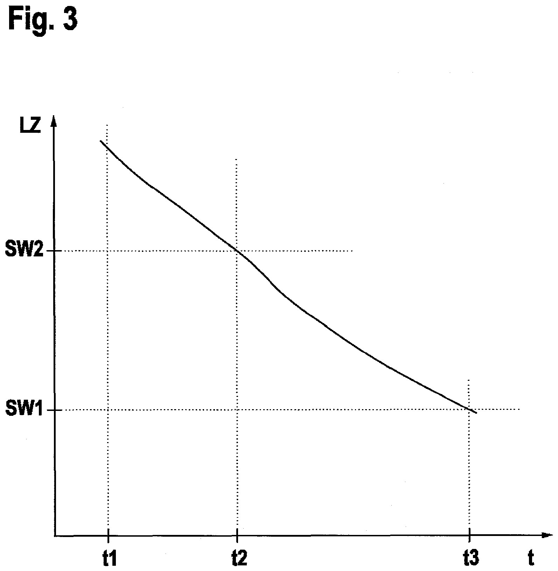

Unter Bezug auf Figur 2 wird eine Ausführungsvariante der Erfindung beschrieben, die eine Starthilfe bei Fahrzeugen ermöglicht, die mit einem Wechselrichter (Aktiv-Frontend zum Netz) ausgerüstet sind. Ein derartiger Wechselrichter, bzw. ein Teil desselben kann vorteilhaft als Leistungssteller für den Starthilfevorgang eingesetzt werden. Das Starthilfe leistende Fahrzeug ist mit Bezugsziffer 200, das Starthilfe empfangende Fahrzeug mit Bezugsziffer 201 bezeichnet. Die Bordnetze 200A, 201A der Fahrzeuge 200, 201 sind im Wesentlichen identisch aufgebaut. Im Folgenden werden daher nur Komponenten des Bordnetzes 200A näher beschrieben. Das Bordnetz 200A des Starthilfe leistenden Fahrzeugs 200 umfasst eingangsseitig einen Netzanschluss 1.1 für den Anschluss an ein Drehstromnetz und einen Netzanschluss 1.2 für den wahlweisen Anschluss an ein 2-phasiges Wechselstromnetz. Dadurch ergibt sich eine erhöhte Flexibilität für die Aufladung der Batterie des Fahrzeugs. Auf Filtermittel, wie Netzfilter und Netzdrossel, folgt zunächst ein Hauptschütz 1.5, an das sich ein Wechselrichter 20 anschließt. Auf den Wechselrichter 20 folgt ein EMV-Filter 1.8, an den sich das HV-Bordnetz (HV = Hochvolt) anschließt. Mit ELM ist die mindestens eine elektrische Maschine des Fahrzeugs 200 bezeichnet. Um eine Starthilfe zu ermöglichen, werden die Bordnetze 200A, 201A des Starthilfe leistenden Fahrzeugs 200 und des Starthilfe empfangenden Fahrzeugs 201 über die Leitungen 200.1 und 200.2 miteinander verbunden. Dabei verbindet die Leitung 200.1 die zwei Netzanschlüsse 1.1 der Bordnetze 200A und 201A. Lediglich beispielhaft ist hier in Figur 2 eine Verbindung zwischen den Phasenleitungen L1 dargestellt. Die zweite Leitung 200.2 verbindet die negativen Anschlüsse der Zwischenkreisschienen der beiden Bordnetze 200A, 201A. Für den Fall, dass die aktuelle Bordnetzspannung des Starthilfe erwartenden Fahrzeugs 201 höher ist als die Bordnetzspannung des Starthilfe leistenden Fahrzeugs 200A, ist ein Hochsetzstellerbetrieb erforderlich, um eine Energieübertragung von dem Fahrzeug 200 zu dem Fahrzeug 201 zu ermöglichen. Dazu müssen die Schaltelemente T2 und T3 gesperrt sein, während das Schaltelement T1 stets leitend geschaltet ist und das Schaltelement T4 getaktet wird. Bei den Schaltelementen T1, T2, T3, T4 handelt es sich zweckmäßig um Leistungstransistoren in IGBT-Technik. Bei der beschriebenen Schaltungsauslegung wird der Hochsetzsteller aus dem Schaltelement T4, den Drosseln des eingangsseitig geschalteten Netzfilters 1.3, 1.4, und der Antiparalleldiode des Schaltelements T3 gebildet. Falls die Bordnetzspannung des Starthilfe empfangenden Fahrzeugs 200A niedriger ist als die Bordnetzspannung des Starthilfe leistenden Fahrzeugs 200, so ist der Einsatz eines Tiefsetzstellers zweckmäßig, um die Spannungsniveaus anzupassen. Ein derartiger Tiefsetzsteller kann vorteilhaft aus dem Schaltelement T1, der Antiparalleldiode des Schaltelements T2 und den eingangsseitig geschalteten Netzdrosseln 1.4 gebildet werden. Die Schaltelemente T2, T3 und T4 sind dabei gesperrt, während das Schaltelement T1 entsprechend getaktet wird. Die maximal mögliche Übertragungsleistung entspricht dabei dem Minimalwert von maximal zulässiger Entladeleistung und maximal zulässiger Ladeleistung. Diese Leistungserfordernisse müssen von den Batteriemanagementsystemen der beiden Fahrzeuge 200, 201 gesteuert werden. Dazu umfassen die beiderseitigen Bordnetze 200A, 201A Steuergeräte 200B, 201B, die in dem ihnen zugeordneten Bordnetz einerseits Schaltelemente steuern und andererseits, während der Dauer des Starthilfevorgangs, miteinander kommunizieren. So steuert beispielsweise das Steuergerät 200B die Schaltelemente T1, T2 des Bordnetzes 200A und das Steuergerät 201B die Schaltelemente T3, T4 des Bordnetzes 201A. Die Kommunikation zwischen den Steuergeräten 200B, 201B ist durch entsprechend benannte Pfeile 200B, 201B angedeutet. Zweckmäßig wird die Kommunikation zwischen den genannten Steuergeräten über die Schnittstelle SB geleistet, mit der die Steuergeräte 200B, 201B verbunden sind. Natürlich muss auch bei der hier beschriebenen Ausführungsvariante der Erfindung dafür Sorge getragen werden, dass der Energiespeicher des Starthilfe leistenden Fahrzeugs 200 nicht zu stark entladen wird, um zu verhindern, dass dieses Fahrzeug selbst zum Pannenfall wird. Der Energiespeicher des Starthilfe leistenden Fahrzeugs 200 darf nur soweit entladen werden, dass die minimale Reichweite noch mindestens etwa 10 bis 20 km beträgt. Es wird damit gerechnet, dass innerhalb dieser Entfernung eine geeignete Ladestation angefahren werden kann, um den Energiespeicher wieder zu laden. Zweckmäßig wird dabei ein Schwellwert S1 für den Ladungszustand des Starthilfe leistenden Fahrzeugs vorgegeben, wie dies im Folgenden unter Bezug auf Figur 3 erläutert wird. Dargestellt ist der Ladungszustand LZ des Starthilfe leistenden Fahrzeugs als Funktion der Zeit t. Es werde angenommen, dass die Bordnetze der beiden Fahrzeuge verbunden sind und die Starthilfe zum Zeitpunkt t1 beginnt. Durch die Energiezufuhr zu dem Starthilfe empfangenden Fahrzeug 201 sinkt der Ladungszustand des Starthilfe leistenden Fahrzeugs 200 ab. Zum Zeitpunkt t3 wird der vorgegebene Schwellwert SW1 erreicht. Der Starthilfevorgang wird abgebrochen, da sonst das Starthilfe leistende Fahrzeug selbst Gefahr liefe, als Pannenfahrzeug liegen zu bleiben. Anstelle eines fest vorgegebenen Schwellwerts SW1 könnte, gemäß einer Ausführungsvariante der Erfindung, ein variabler Schwellwert SW1* vorgegeben werden, dessen Wert beispielsweise von der jeweiligen Entfernung des Pannenorts zu der nächstgelegenen Ladestation abhängig ist. Der Ladezustand des Starthilfe leistenden Fahrzeugs und demzufolge der Schwellwert SW1* kann umso kleiner gewählt werden, je näher der Pannenort an der Ladestation liegt. Dadurch ist eine möglichst effektive Hilfeleistung denkbar. Die jeweilige Entfernung des Pannenorts von der nächstgelegenen Ladestation kann beispielsweise aus der digitalen Karte eines Navigationssystems ermittelt werden. Um die Reichweite eines Elektrofahrzeugs zu vergrößern, wurde in einer vorteilhaften Ausführungsvariante bereits vorgeschlagen, diese mit einem so genannten Range Extender auszurüsten. Darunter versteht man einen kleinen Verbrennungsmotor, der über einen Generator lediglich zur Aufladung des Energiespeichers des Elektrofahrzeugs dient. Der Range Extender wird aktiviert, wenn der Ladungszustand des Elektrofahrzeugs unter einen bestimmten Minimalwert gesunken ist. Für den Fall, dass ein Starthilfe leistendes Fahrzeug mit einem derartigen Range Extender 102 (siehe Figur 2) ausgerüstet ist, kann, wie in Figur 3 dargestellt, vorteilhaft ein zweiter Schwellwert SW2 des Ladungszustands vorgegeben werden, der oberhalb des oben genannten Schwellwerts SW1 liegt. Bei Erreichen des Schwellwerts SW2 während eines Starthilfevorgangs, in Figur 3 ist das zum Zeitpunkt t2 der Fall, wird dann der Range Extender 102 gestartet, um den Starthilfevorgang höchstens bis zum Erreichen des Schwellwerts SW1 fortsetzen zu können. Vorzugsweise wird die Leistungsregelung jeweils von dem Fahrzeug übernommen, bei dessen Wechselrichter während des Starthilfevorgangs ein Schaltelement getaktet betrieben wird. Bei einem Tiefsetzstellerbetrieb übernimmt demzufolge das die Starthilfe leistende Fahrzeug 200 die Steuerung. Bei einem Hochsetzstellerbetrieb übernimmt das die Starthilfe empfangende Fahrzeug 201 die Steuerung. Für die Steuerung des jeweils getaktet betriebenen Schaltelements kann zweckmäßig eine Zweipunktregelung, eine Pulsweitenmodulation oder ähnliches eingesetzt werden. Auch bei dieser Ausführungsvariante sind die Leitungen 200.1, 200.2 als ein verpolungssicheres Kabel mit entsprechenden Steckverbindungen auszubilden. Selbstverständlich sind auch in den Fahrzeugen 200, 201 entsprechende elektrische Steckverbindungen vorzusehen. Besonders vorteilhaft umfasst das die Leitungen 200.1, 200.2 enthaltende Kabel auch wieder eine Schnittstelle SB, die eine Verbindung zu den beiderseitigen Bordnetzen 200A, 201A und insbesondere zu den Steuergeräten 200B, 201B ermöglicht.

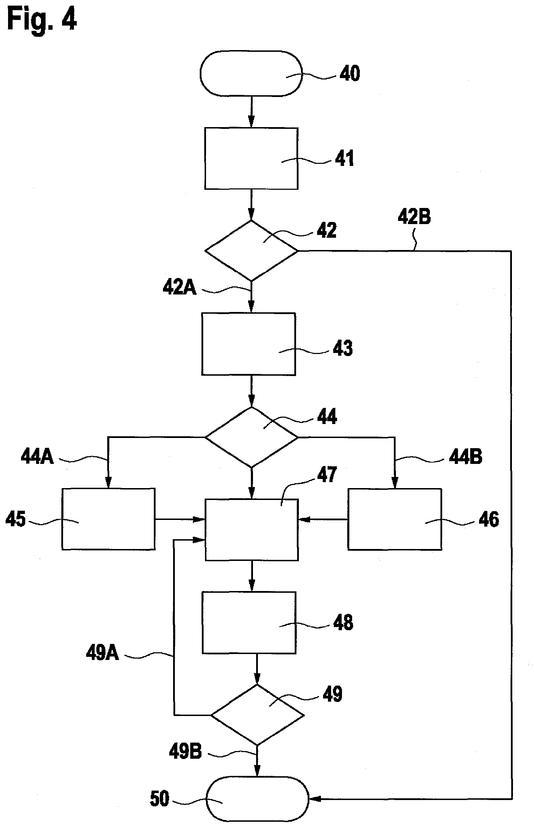

Im Folgenden wird, unter Bezugnahme auf das in Figur 4 dargestellte Ablaufdiagramm, ein Starthilfevorgang zwischen zwei Elektrofahrzeugen, beispielsweise zwischen den Elektrofahrzeugen 100 und 101 in Figur 1, beispielhaft erläutert. Zum Startzeitpunkt 40 des Starthilfeverfahrens liegt eine elektrische Verbindung zwischen den beiden Bordnetzen 100A und 101A des Starthilfe leistenden Fahrzeugs 100 und des Starthilfe benötigenden Fahrzeugs 101 vor. Die genannten Fahrzeuge wurden also verpolungssicher mit dem Starthilfekabel verbunden, das die Leiter 100.1, 100.2 und die Schnittstelle SA umfasst. Mit der Schnittstelle SA sind auch die Steuergeräte 100B und 101B verbunden, die so miteinander kommunizieren können, um den Starthilfevorgang zu steuern. In dem Schritt 41 wird der Ladungszustand der beiden Fahrzeuge 100, 101 geprüft. Je nach Ladungszustand des Starthilfe leistenden Fahrzeugs 100 wird im folgenden Verzweigungsschritt (Schritt 42) zu den folgenden Alternativen verzweigt. Ist der Ladungszustand des Starthilfe leistenden Fahrzeugs 100 zu gering für eine effektive Starthilfe, dann wird das Starthilfeverfahren sofort abgebrochen, um die Fahrfähigkeit des Fahrzeugs 100 nicht zu gefährden. Über den Schritt 42B wird also der Endpunkt 50 erreicht, in dem das Starthilfeverfahren beendet ist. Bei einem hinreichend großen Ladungszustand des Fahrzeugs 100 erfolgt über den Schritt 42A ein Übergang zu dem Schritt 43, in dem die Spannungsniveaus der beiden Bordnetze 100A und 101A überprüft werden. In Abhängigkeit von dem Ergebnis der Spannungsprüfung erfolgt in dem Verzweigungsschritt 44 entweder über den Schritt 44A ein Übergang zu dem Schritt 45 oder über den Schritt 44B ein Übergang zu dem Schritt 46. Der Weg über den Schritt 44A wird beispielsweise eingeschlagen, wenn das Spannungsniveau des Bordnetzes 101A des Fahrzeugs 101 größer ist als das Spannungsniveau des Bordnetzes 100A des Starthilfe leistenden Fahrzeugs 100. In diesem Fall wird das Bordnetz 100A des Fahrzeugs 100 in dem Schritt 45 auf Hochsetzstellerbetrieb geschaltet, um auf diese Weise die Spannungswerte der beiden Bordnetze anzupassen. Der Weg über den Schritt 44B wird beispielsweise eingeschlagen, wenn das Spannungsniveau des Bordnetzes 101A des Fahrzeugs 101 niedriger ist als das Spannungsniveau des Bordnetzes 100A des Starthilfe leistenden Fahrzeugs 100. In diesem Fall wird das Bordnetz 100A des Fahrzeugs 100 in dem Schritt 46 auf Tiefsetzstellerbetrieb geschaltet, um auf diese Weise die Spannungswerte der beiden Bordnetze anzupassen. Im Schritt 47 wird der Ladevorgang bei dem Starthilfe empfangenden Fahrzeug 101 durchgeführt. Im Schritt 48 wird der Ladungszustand des Starthilfe leistenden Fahrzeugs 100, vorzugsweise periodisch, in regelmäßigen Intervallen, überprüft. In Abhängigkeit von dem Ergebnis der Überprüfung wird im Schritt 49 entweder zu dem Schritt 49A oder dem Schritt 49B verzweigt. Durch den Schritt 49A erfolgt eine Rückkehr zu dem Schritt 47 mit der Fortsetzung des Ladevorgangs für das Starthilfe empfangende Fahrzeug 101. Durch den Schritt 49B wird zu dem Endpunkt 50 des Starthilfevorgangs übergegangen, wenn festgestellt wird, dass der Ladungszustand des Starthilfe leistenden Fahrzeugs zu niedrig geworden ist. Dies kann beispielsweise durch Unterschreiten eines festgelegten Schwellwerts für den Ladungszustand, siehe beispielsweise den Schwellwert S1 in Figur 3, festgestellt werden.

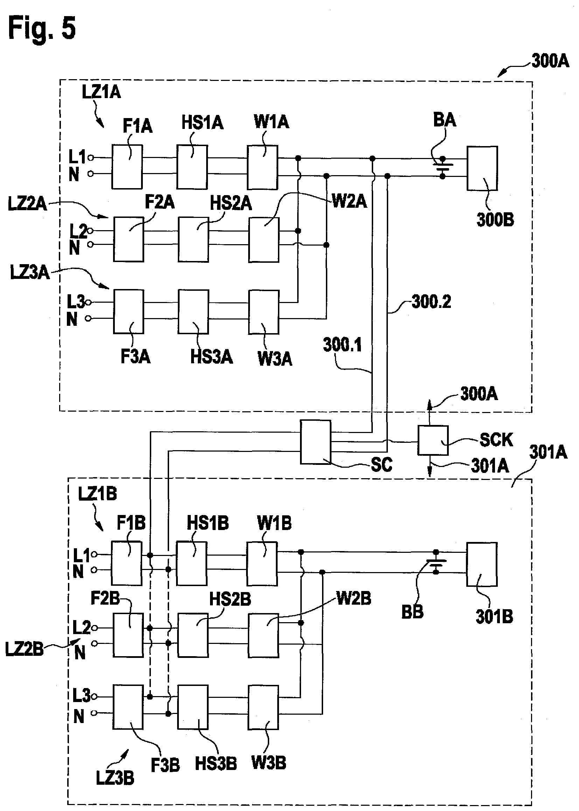

Figur 5 zeigt, in vereinfachter Darstellung als Blockschaltbild, ein weiteres Ausführungsbeispiel von Bordnetzen 300A, 301A eines Starthilfe gebenden und eines Starthilfe empfangenden Fahrzeugs. Die Fahrzeuge selbst sind hierbei nicht dargestellt. Das Bordnetz des Starthilfe leistenden Fahrzeugs ist mit 300A, das Bordnetz des Starthilfe in Anspruch nehmenden Fahrzeugs mit 301 A bezeichnet. Das Bordnetz 300A umfasst drei parallel geschaltete Ladezweige LZ1A, LZ2A, LZ3A. Jeder Ladezweig umfasst ein Filter, einen Hochsetzsteller und einen potentialtrennenden Wandler, insbesondere einen Tiefsetzsteller. Der Ladezweig LZ1A umfasst demzufolge das Filter F1A, den Hochsetzsteller HS1A und den Wandler W1A. Der Ladezweig LZ2A umfasst das Filter F2A, den Hochsetzsteller HS2A und den Wandler W2A. Der Ladezweig LZ3A umfasst das Filter F3A, den Hochsetzsteller HS3A und den Wandler W3A. Mit der von den Ladezweigen LZ1A, LZ2A, LZ3A bereitgestellten Spannung wird die Batterie BA des Bordnetzes 300A geladen. Mit 300B sind summarisch weitere, hier nicht detailliert dargestellte Komponenten des Bordnetzes 300A bezeichnet.

Das Bordnetz 301A umfasst ebenfalls drei Ladezweige LZ1B, LZ2B, LZ3B für die Versorgung der Batterie BB. Jeder Ladezweig ist entsprechend den Ladezweigen des Bordnetzes 300A aufgebaut. Der Ladezweig LZ1B umfasst also ein Filter F1B, einen Hochsetzsteller HS1B und einen Wandler W1B. Der Ladezweig LZ2B umfasst ein Filter F2B, einen Hochsetzsteller HS2B und einen Wandler W2B. Der Ladezweig LZ3B umfasst ein Filter F3B, einen Hochsetzsteller HS3B und einen Wandler W3B. Der mit Bezugsziffer 301B bezeichnete Block steht wieder summarisch für weitere Komponenten des Bordnetzes 301A. Zum Zwecke der Starthilfe können die beiden Bordnetze 300A, 301A über die Leitungen 300.1 und 300.2 miteinander verbunden werden. Die genannten Leitungen verbinden dabei die Batterie BA des Bordnetzes 300A mindestens mit einem Ladezweig, insbesondere dem Ladezweig LZ1B, des Bordnetzes 301A. Alternativ kann die Batterie BA auch mit allen Ladezweigen LZ1B, LZ2B, LZ3B des Bordnetzes 301A verbunden sein, was durch die gestrichelte Leitungsführung in Figur 5 angedeutet ist. Anstelle von drei parallel geschalteten Ladezweige LZ1A, LZ2A, LZ3A kann das Bordnetz auch nur übe einen einzigen Ladezweig verfügen, beispielsweise des Ladezweig LZ1A. Die Leitungen 300.1, 300.2 bilden ein Ladekabel, das eine Schnittstelle SC mit einer oben schon in Verbindung mit der Schnittstelle SA beschriebenen Funktionalität umfasst. Zusätzlich, in Verbindung mit der Schnittstelle SC oder alternativ auch als integraler Bestandteil der Schnittstelle SC, kann ein Kommunikationsmodul SCK vorgesehen sein. Spätestens bei einer Verbindung der beiden Bordnetze 300A, 301A über ein Ladekabel (Leitungen 300.1, 300.2) können die beiden Bordnetze drahtgebunden oder auch drahtlos miteinander kommunizieren. Auf diese Weise kann überprüft und sichergestellt werden, dass die beiden Bordnetze kompatibel sind und eine Starthilfe risikolos möglich ist.

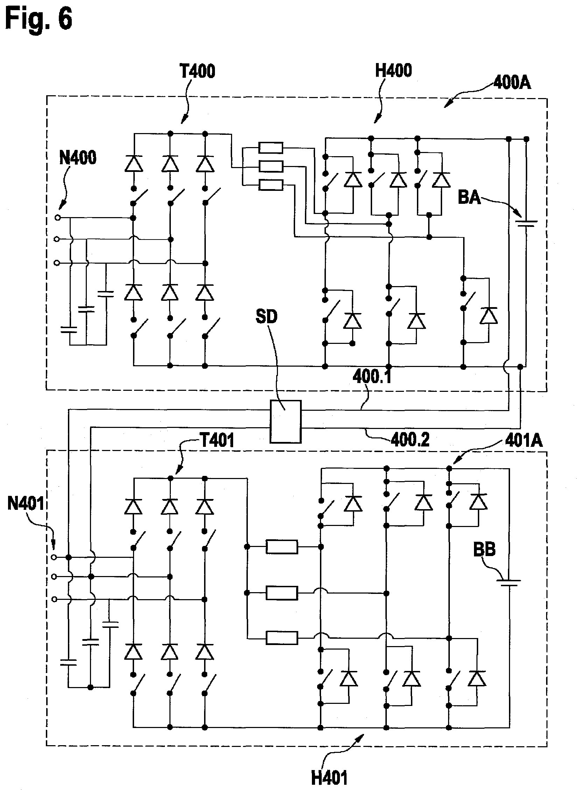

Figur 6 zeigt eine weitere Ausführungsvariante mit dem Bordnetz 400A eines Starthilfe gebenden und dem Bordnetz 401A eines Starthilfe empfangenden Fahrzeugs. Das Bordnetz 400A umfasst eine Batterie BA, die über einen Netzanschluss N400, einen Tiefsetzsteller T400 und einen Hochsetzsteller H400 aufladbar ist. Das Bordnetz 401A umfasst eine Batterie BB, die über einen Netzanschluss N401, einen Tiefsetzsteller T401 und einen Hochsetzsteller H401 aufladbar ist. Für den Fall derb Starthilfe sind die Anschlüsse der Batterie BA des Bordnetzes 400A über Leitungen 400.1 und 400.2 mit 2 Phasenanschlüssen des Netzanschlusses N401 des Bordnetzes 401A verbunden. Die vorzugsweise als Starthilfekabel ausgelegten Leitungen 400.1 und 400.2 umfassen weiterhin eine Schnittstelle SD mit der oben schon beschriebenen Funktionalität.

## Patentansprüche

1. Starthilfeverfahren zwischen einem Starthilfe leistenden Fahrzeug (100) und einem Starthilfe empfangenden Elektrofahrzeug (101) ohne Verbrennungsmotor,
wobei das Starthilfe leistende Fahrzeug (100) ein Elektrofahrzeug (100) ohne Verbrennungsmotor ist und die Bordnetze (100A, 101A) der beiden Elektrofahrzeuge (100, 101) während der Dauer der Starthilfe vorübergehend elektrisch miteinander verbunden werden,
wobei bei mit Hochtiefstellern (1.7) als Ladegerät ausgerüsteten Elektrofahrzeugen (100, 101) die Zwischenkreisschiene (1.9) des Starthilfe leistenden Elektrofahrzeugs (100) mit einer Gleichstromschiene des Starthilfe empfangenden Elektrofahrzeugs (101) verbunden wird und die Batterie des Starthilfe empfangenden Elektrofahrzeuges (101) aufgeladen wird,
wobei in jedem Fahrzeug (100, 101) eine Steckverbindung vorgesehen ist, über die jeweils die Zwischenkreisschiene (1.9) des Starthilfe leistenden Fahrzeugs (100) mit der Gleichstromschiene des Starthilfe empfangenden Elektrofahrzeugs (101) nach einer Gleichrichtereinheit (1.6) und vor einem Gleichspannungswandler des Starthilfe empfangenden Elektrofahrzeugs (101) verbunden wird, und über einen jeweiligen Anschluss eines Starthilfekabels festgelegt wird, welches der beiden Fahrzeuge (100, 101) jeweils als Starthilfe erwartendes Fahrzeug (101) oder als Starthilfe leistendes Fahrzeug (100) ausgewählt ist, wobei zu Beginn des Starthilfeverfahrens die Ladungszustände der beiden Fahrzeuge (100, 101) erfasst werden, wobei für den Ladungszustand des Starthilfe leistenden Fahrzeugs (100) ein erster Schwellwert (SW1) vorgegeben wird, und
wobei das Starthilfeverfahren dann abgebrochen bzw. beendet wird, wenn der Ladungszustand des Starthilfe leistenden Fahrzeugs (100) den genannten Schwellwert (SW1) unterschreitet.

2. Starthilfeverfahren nach einem der vorhergehenden Ansprüche, **dadurch gekennzeichnet, dass** zu Beginn des Starthilfeverfahrens die Spannungswerte der Bordnetze (100A, 101A) der beiden Fahrzeuge (100, 101) erfasst werden und dass das Bordnetz (100A, 101A) des Starthilfe leistenden Fahrzeugs (100) in einem Hochsetzstellerbetrieb betrieben wird, wenn der Spannungswert des Starthilfe empfangenden Fahrzeugs (101) höher ist als der Spannungswert des Starthilfe leistenden Fahrzeugs (100).

3. Starthilfeverfahren nach einem der vorhergehenden Ansprüche, **dadurch gekennzeichnet, dass** zu Beginn des Starthilfeverfahrens die Spannungswerte der Bordnetze (100A, 101A) der beiden Fahrzeuge (100, : 101) erfasst werden und dass das Bordnetz des Starthilfe leistenden Fahrzeugs (100) in einem Tiefsetzstellerbetrieb betrieben wird, wenn der Spannungswert des Starthilfe empfangenden Fahrzeugs (101) niedriger ist als der Spannungswert des Starthilfe leistenden Fahrzeugs (100).

4. Starthilfeverfahren nach einem der vorhergehenden Ansprüche, **dadurch gekennzeichnet, dass** das Starthilfe leistende und empfangende Elektrofahrzeug (100, 101) jeweils von einer elektrischen Maschine (ELM) angetrieben wird.

5. Starthilfeverfahren nach einem der vorhergehenden Ansprüche, **dadurch gekennzeichnet, dass** der erste Schwellwert (SW1) variabel ausgestaltet ist.

6. Starthilfeverfahren nach einem der vorhergehenden Ansprüche, **dadurch gekennzeichnet, dass** die Größe des Schwellwerts (SW1) in Abhängigkeit von der Entfernung des Pannenorts zu der nächstgelegenen Ladestation gewählt wird.

## Claims

1. Jump starting method between a vehicle (100) performing jump starting and an electric vehicle (101) receiving jump starting which does not have an internal combustion engine, wherein the vehicle (100) performing jump starting is an electric vehicle (100) without an internal combustion engine and the on-board electrical systems (100A, 101A) of the two electric vehicles (100, 101) are temporarily electrically connected to one another during the jump starting period, wherein, in the case of electric vehicles (100, 101) which are equipped with high step-down converters (1.7) as charging device, the intermediate circuit rail (1.9) of the electric vehicle (100) performing jump starting is connected to a DC rail of the electric vehicle (101) receiving jump starting, and the battery of the electric vehicle (101) receiving jump starting is charged, wherein a plug-in connection is provided in each vehicle (100, 101), by means of which plug-in connection in each case the intermediate circuit rail (1.9) of the vehicle (100) performing jump starting is connected to the DC rail of the electric vehicle (101) receiving jump starting downstream of a rectifier unit (1.6) and upstream of a DC-DC converter of the electric vehicle (101) receiving jump starting, and a respective connection of a jump starting cable defines which of the two vehicles (100, 101) is respectively selected as the vehicle (101) expecting jump starting or as the vehicle (100) performing jump starting, wherein the states of charge of the two vehicles (100, 101) are detected at the beginning of the jump starting method, wherein a first threshold value (SW1) is prespecified for the state of charge of the vehicle (100) performing jump starting, and wherein the jump starting method is interrupted or terminated when the state of charge of the vehicle (100) performing jump starting falls below the said threshold value (SW1).

2. Jump starting method according to one of the preceding claims, **characterized in that**, at the beginning of the jump starting method, the voltage values of the on-board electrical systems (100A, 101A) of the two vehicles (100, 101) are detected, and **in that** the on-board electrical system (100A, 101A) of the vehicle (100) performing jump starting is operated in a step-up converter mode when the voltage value of the vehicle (101) receiving jump starting is higher than the voltage value of the vehicle (100) performing jump starting.

3. Jump starting method according to either of the preceding claims, **characterized in that**, at the beginning of the jump starting method, the voltage values of the on-board electrical systems (100A, 101A) of the two vehicles (100, 101) are detected, and **in that** the on-board electrical system of the vehicle (100) performing jump starting is operated in a step-down converter mode when the voltage value of the vehicle (101) receiving jump starting is lower than the voltage value of the vehicle (100) performing jump starting.

4. Jump starting method according to one of the preceding claims, **characterized in that** the electric vehicle (100) performing jump starting and the electric vehicle (101) receiving jump starting are each driven by an electrical machine (ELM).

5. Jump starting method according to one of the preceding claims, **characterized in that** the first threshold value (SW1) is of variable configuration.

6. Jump starting method according to one of the preceding claims, **characterized in that** the magnitude of the threshold value (SW1) is selected depending on the distance of the location of the breakdown from the closest charging station.

## Revendications

1. Procédé d'assistance au démarrage entre un véhicule (100) fournissant une assistance au démarrage et un véhicule électrique (101) recevant une assistance au démarrage sans moteur à combustion interne,
dans lequel le véhicule (100) fournissant l'assistance au démarrage est un véhicule électrique (100) sans moteur à combustion interne, et les réseaux de bord (100A, 101A) des deux véhicules électriques (100, 101) sont connectés électriquement l'un à l'autre de manière temporaire pendant la durée de l'assistance au démarrage,
dans lequel, dans les véhicules électriques (100, 101) équipés de convertisseurs abaisseurs élevés (1.7) en tant qu'appareil de charge, le rail de circuit intermédiaire (1.9) du véhicule électrique (100) fournissant l'assistance au démarrage est connecté à un rail de courant continu du véhicule électrique (101) recevant l'assistance au démarrage et la batterie du véhicule électrique (101) recevant l'assistance au démarrage est chargée,
dans lequel il est prévu dans chaque véhicule (100, 101) une connexion enfichable par le biais de laquelle le rail de circuit intermédiaire (1.9) du véhicule (100) fournissant l'assistance au démarrage est respectivement relié au rail de courant continu du véhicule électrique (101) recevant l'assistance au démarrage, en aval d'une unité de redressement (1.6) et en amont d'un convertisseur de tension continue du véhicule électrique (101) recevant l'assistance au démarrage, et il est déterminé par le biais d'une connexion respective d'un câble d'assistance au démarrage, lequel des deux véhicules (100, 101) est respectivement sélectionné en tant que véhicule (101) en attente d'assistance au démarrage ou en tant que véhicule (100) fournissant l'assistance au démarrage,
dans lequel, au début du procédé d'assistance au démarrage, les états de charge des deux véhicules (100, 101) sont détectés,
dans lequel une première valeur de seuil (SW1) est prédéfinie pour l'état de charge du véhicule (100) fournissant une assistance au démarrage, et
dans lequel le procédé d'assistance au démarrage est interrompu ou terminé lorsque l'état de charge du véhicule (100) fournissant l'assistance au démarrage s'abaisse en dessous de ladite valeur de seuil (SW1).

2. Procédé d'assistance au démarrage selon l'une des revendications précédentes, **caractérisé en ce qu'**au début du procédé d'assistance au démarrage, les valeurs de tension des réseaux de bord (100A, 101A) des deux véhicules (100, 101) sont détectées, et **en ce que** le réseau de bord (100A, 101A) du véhicule (100) fournissant l'assistance au démarrage est utilisé dans un mode de convertisseur élévateur lorsque la valeur de tension du véhicule (101) recevant l'assistance au démarrage est supérieure à la valeur de tension du véhicule (100) fournissant l'assistance au démarrage.

3. Procédé d'assistance au démarrage selon l'une des revendications précédentes, **caractérisé en ce qu'**au début du procédé d'assistance au démarrage, les valeurs de tension des réseaux de bord (100A, 101A) des deux véhicules (100, 101) sont détectées et **en ce que** le réseau de bord du véhicule (100) fournissant l'assistance au démarrage est utilisé dans un mode de convertisseur abaisseur lorsque la valeur de tension du véhicule (101) recevant l'assistance au démarrage est inférieure à la valeur de tension du véhicule (100) fournissant l'assistance au démarrage.

4. Procédé d'assistance au démarrage selon l'une des revendications précédentes, **caractérisé en ce que** le véhicule électrique (100, 101) fournissant et recevant l'assistance au démarrage est respectivement entraîné par une machine électrique (ELM).

5. Procédé d'assistance au démarrage selon l'une des revendications précédentes, **caractérisé en ce que** la première valeur de seuil (SW1) est conçue pour être variable.

6. Procédé d'assistance au démarrage selon l'une des revendications précédentes, **caractérisé en ce que** la grandeur de la valeur de seuil (SW1) est choisie en fonction de la distance du lieu de panne par rapport à la station de charge la plus proche.
